(19) Europäisches Patentamt / European Patent Office / Office européen des brevets

(11) **EP 4 641 680 A1**

(12) **EUROPEAN PATENT APPLICATION**

(43) Date of publication:
**29.10.2025 Bulletin 2025/44**

(21) Application number: **25171689.0**

(22) Date of filing: **22.04.2025**

(51) International Patent Classification (IPC):
$H01M\ 4/36^{(2006.01)}$   $H01M\ 4/505^{(2010.01)}$
$C08K\ 3/32^{(2006.01)}$   $H01M\ 4/58^{(2010.01)}$
$H01M\ 4/62^{(2006.01)}$   $H01M\ 10/0525^{(2010.01)}$
$H01M\ 4/02^{(2006.01)}$   $H01M\ 4/136^{(2010.01)}$

(52) Cooperative Patent Classification (CPC):
H01M 4/5825; C08K 3/32; H01M 4/136;
H01M 4/364; H01M 4/366; H01M 4/625;
H01M 10/0525; H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: **22.04.2024 KR 20240053567**

(71) Applicant: SAMSUNG SDI CO., LTD.
Yongin-si, Gyeonggi-do 17084 (KR)

(72) Inventors:
• **Choi, Aram**
**Yongin-si (KR)**

• **Lee, Soonrewl**
**Yongin-si (KR)**
• **Kim, Young-Ki**
**Yongin-si (KR)**
• **Kim, Sangmi**
**Yongin-si (KR)**
• **Doo, Sungwook**
**Yongin-si (KR)**
• **Kang, Gwiwoon**
**Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE CONTAINING THE SAME, AND RECHARGEABLE LITHIUM BATTERY INCLUDING THE SAME**

(57) A positive electrode active material for a rechargeable lithium battery, a positive electrode containing the same, and a rechargeable lithium battery including the same as provided. A positive electrode active material includes titanium (Ti) in an amount of about 1000 ppm to about 9000 ppm, at least one primary particle, the primary particle having a size of about 50 nm to about 300 nm, and a compound represented by Formula 1:

$$\text{Formula 1} \qquad Li_aMn_xFe_{1-x}M_yPO_{4-b}$$

wherein, in Formula 1 above, $0.8 \leq a \leq 1.2$, $0.2 \leq x \leq 0.8$, $0 \leq y \leq 0.05$, $0 \leq b \leq 0.05$, and M is at least one element selected from the group consisting of Al, Mg, Zr, V, Zn, Nb, K, Y, B, and Cu.

FIG. 9A

EP 4 641 680 A1

**Description**

**BACKGROUND**

**1. Field**

Embodiments of the present disclosure herein relate to a positive electrode active material for a rechargeable lithium battery, a positive electrode including the positive electrode active material, and a rechargeable lithium battery including the positive electrode. For example, embodiments relate to a positive electrode active material containing an olivine-based lithium compound, a positive electrode including the positive electrode active material, and a rechargeable lithium battery including the positive electrode.

**2. Description of the Related Art**

Recently, with the rapid spread of battery-using electronic devices (such as mobile phones and/or laptop computers), and/or electric vehicles, the demand for rechargeable batteries with relatively high energy densities and high capacities has rapidly increased. Accordingly, research and development efforts have been actively conducted to improve performance of rechargeable lithium batteries.

A rechargeable lithium battery may include a positive electrode and a negative electrode each containing an active material capable of intercalation and deintercalation of lithium ions, and an electrolyte solution. Electrical energy is produced by oxidation and reduction reactions when the lithium ions are intercalated and deintercalated into/from the positive electrode and the negative electrode.

The above information disclosed in this Background section is only for enhancement of understanding of the background of the disclosure and therefore it may contain information that does not constitute prior art.

**SUMMARY**

Aspects of one or more embodiments of the present disclosure are directed toward a positive electrode active material having high energy density, high operating voltage, and high conductivity.

Aspects of one or more embodiments of the present disclosure also are directed toward a rechargeable lithium battery having high energy density, high operating voltage, improved low-temperature characteristics, and long lifespan.

Additional aspects will be set forth in part in the description which follows and, in part, will be apparent from the description, or may be learned by practice of the presented embodiments of the disclosure.

One or more embodiments of the present disclosure provides a positive electrode active material including a first particle including titanium (Ti) in an amount (of Ti in the first particle) from about 1000 ppm to about 9000 ppm. The first particle includes at least one primary particle with the primary particle having a size of about 50 nm to about 300 nm and contains a compound represented by Formula 1:

$$\text{Formula 1} \qquad Li_aMn_xFe_{1-x}M_yPO_{4-b}$$

In Formula 1 above, $0.8 \leq a \leq 1.2$, $0.2 \leq x \leq 0.8$, $0 \leq y \leq 0.05$, $0 \leq b \leq 0.05$, and M is at least one element selected from the group consisting of aluminium (Al), magnesium (Mg), zirconium (Zr), vanadium (V), zinc (Zn), niobium (Nb), potassium (K), yttrium (Y), boron (B), and copper (Cu).

At least some of the above and other features of the invention are set out in the claims.

**BRIEF DESCRIPTION OF THE DRAWINGS**

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual diagram illustrating a rechargeable lithium battery according to one or more embodiments of the present disclosure;
FIG. 2 is an exploded perspective view schematically illustrating a rechargeable lithium battery according to one or more embodiments of the present disclosure;
FIG. 3 is a cross-sectional view schematically illustrating a rechargeable lithium battery according to one or more embodiments of the present disclosure;
FIG. 4 is a perspective view schematically illustrating a rechargeable lithium battery according to one or more embodiments of the present disclosure;

FIG. 5 is an exploded perspective view schematically illustrating a rechargeable lithium battery according to one or more embodiments of the present disclosure;

FIGS. 6 and 7 are each an enlarged view of a positive electrode active material layer of a rechargeable lithium battery according to one or more embodiments of the present disclosure;

FIG. 8 is a flowchart showing a preparation method of a positive electrode active material according to one or more embodiments of the present disclosure; and

FIGS. 9A and 9B are scanning electron microscope (SEM) images of positive electrode active materials according to an example and a comparative example, respectively.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be understood that when an element, such as an area, layer, film, region or portion, is referred to as being "on" another element, it can be directly on or one or more intervening elements may be present. In contrast, when an element or layer is referred to as being "directly on" or "immediately adjacent to" another element or layer, there are no intervening elements or layers present. In addition, it will also be understood that when an element is referred to as being "between" two elements, it can be the only element between the two elements, or one or more intervening elements may also be present.

In the drawings, thicknesses of components are exaggerated for clarity to effectively explain the technical contents. Unless otherwise noted, like reference numerals denote like elements throughout the attached drawings and the written description, and thus, duplicative descriptions thereof may not be provided.

As used herein, the singular forms "a," "an" and "the" are intended to include the plural forms as well, unless the context clearly indicates otherwise.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof. In addition, unless otherwise specially noted, the phrase "A or B" may indicate "A but not B", "B but not A", or "A and B".

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

As used herein, the terms "use," "using," and "used" may be considered synonymous with the terms "utilize," "utilizing," and "utilized," respectively.

In this specification, "combination thereof" may refer to a mixture, a stack, a composite, a copolymer, an alloy, a blend, and a reaction product of components.

In the present disclosure, when particles are spherical, "diameter" indicates a particle diameter or an average particle diameter, and when the particles are non-spherical, the "diameter" indicates a major axis length or an average major axis length. Unless otherwise defined in this disclosure, a particle diameter may be an average particle diameter.

Also, the particle diameter means an average particle diameter (D50) which refers to the average diameter of particles whose cumulative volume corresponds to 50 vol% in the particle size distribution (*e.g.*, cumulative distribution), and refers to the value of the particle size corresponding to 50% from the smallest particle when the total number of particles is 100% in the distribution curve accumulated in the order of the smallest particle size to the largest particle size. The average particle diameter (D50) may be measured by a method generally utilized and/or generally available to those skilled in the art, for example, may be measured by a particle size analyzer, or may also be measured using a transmission electron microscope (TEM) image or a scanning electron microscope (SEM) image. Alternatively, the average particle diameter may be measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (*e.g.*, Microtrac MT 3000) and irradiated with ultrasonic waves of about 28 kHz at an output of about 60 W, and the average particle diameter (D50) based on about 50% of particle size distribution in the measurement instrument may then be calculated.

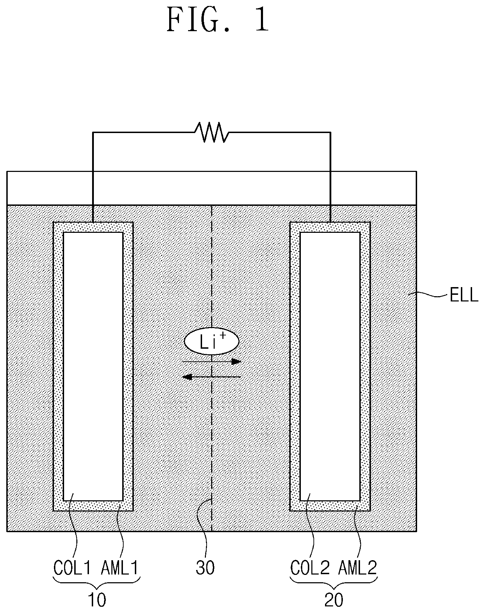

FIG. 1 is a simplified conceptual diagram showing a rechargeable lithium battery according to one or more embodiments of the present disclosure. Referring to FIG. 1, the rechargeable lithium battery includes a positive electrode 10, a negative electrode 20, a separator 30, and an electrolyte solution ELL.

The positive electrode 10 and the negative electrode 20 may be spaced and/or apart (*e.g.*, spaced apart and/or separated) from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

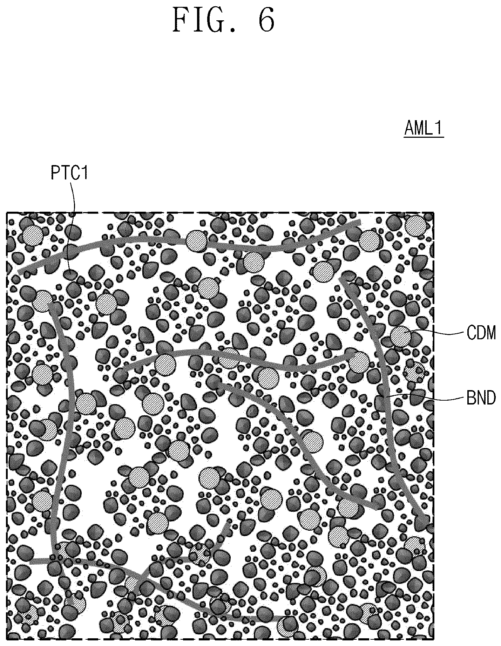

The positive electrode 10 for a rechargeable lithium battery includes a current collector COL1 and a positive electrode active material layer AML1 formed on the current collector COL1. The positive electrode active material layer AML1 includes a positive electrode active material and further includes a binder and a conductive material. The positive electrode active material layer AML1 according to embodiments of the present disclosure will be described in detail with reference to FIG. 6. Aluminium (Al) may be used as the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (*e.g.* an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach (*e.g.*, effectively attach) the negative electrode active material particles to each other and also to attach (*e.g.*, effectively attach) the negative electrode active material to the current collector COL2. The binder may include a non-aqueous binder, an aqueous binder, a dry binder, and/or a (*e.g.*, any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, and/or a (*e.g.*, any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (*e.g.*, any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (*e.g.*, any suitable) combination thereof.

The conductive material (*e.g.*, electron conductor) may be used to impart conductivity (*e.g.* electrical conductivity) to the electrode. Any material that does not cause chemical change (*e.g.* does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like, in a form of a metal powder or a metal fiber; a conductive polymer such as a polyphenylene derivative; and/or a (*e.g.*, any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (*e.g.*, any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon, and/or a (*e.g.*, any suitable) combination thereof. The crystalline carbon may be graphite such as non-shaped, sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (*e.g.*, any suitable) combination thereof). The Sn-based negative electrode active material may include Sn, $SnO_x$ ($0 < x \leq 2$, *e.g.*, $SnO_2$), a Sn-based alloy, and/or a (*e.g.*, any suitable) combination thereof.

The silicon-carbon composite may be a composite of silicon and amorphous carbon. According to one or more embodiments, the silicon-carbon composite may be in a form of silicon particles with amorphous carbon coated on the surface of the silicon particles. For example, the silicon-carbon composite may include a secondary particle (core) in which primary silicon particles are assembled (*e.g.*, agglomerated), and an amorphous carbon coating layer (shell) on the surface of the secondary particle. The amorphous carbon may also be between the primary silicon particles, and for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (*e.g.*, one or both surfaces (*e.g.*, opposite surfaces)) of the porous substrate.

The porous substrate may be a polymer film formed of any one selected polymer including polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamide-imide, polybenzimidazole, polyether sulfone, polyphenylene oxide, a cyclic olefin copolymer, polyphenylene sulfide, polyethylene naphthalate, a glass fiber, polytetrafluoroethylene (*e.g.*, TEFLON), and/or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (*e.g.*, any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, and/or a (*e.g.*, any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, and/or an ether bond), and/or the like; amides such as dimethylformamide; dioxolanes such as 1,3-dioxolane, 1,4-dioxolane, and/or the like; and/or sulfolanes, and/or the like.

The non-aqueous organic solvents may be used alone or in a combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

**Rechargeable Lithium Battery**

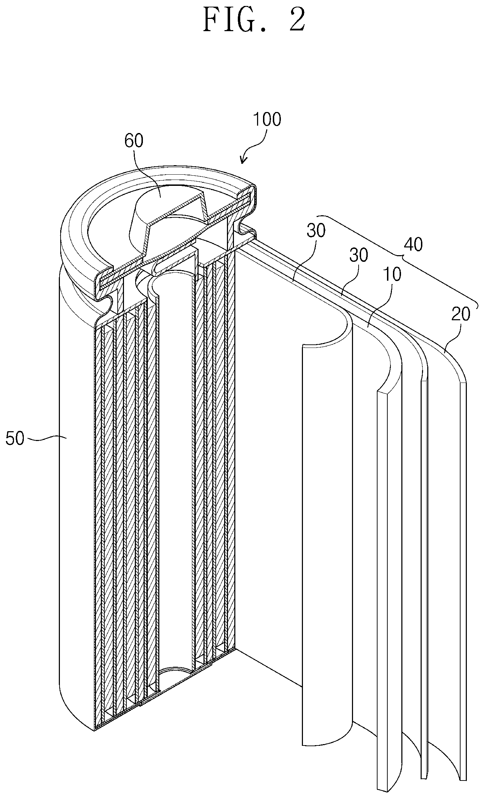

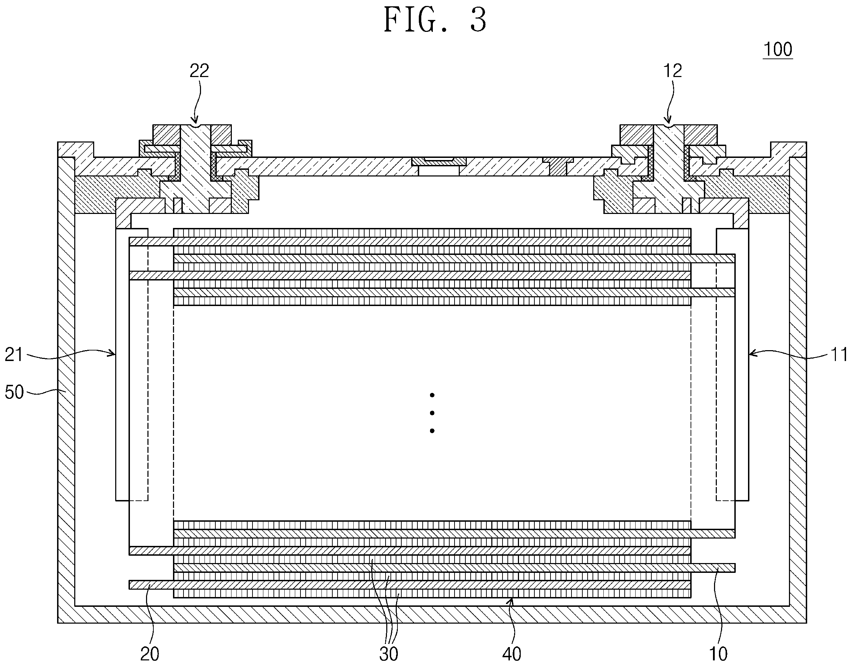

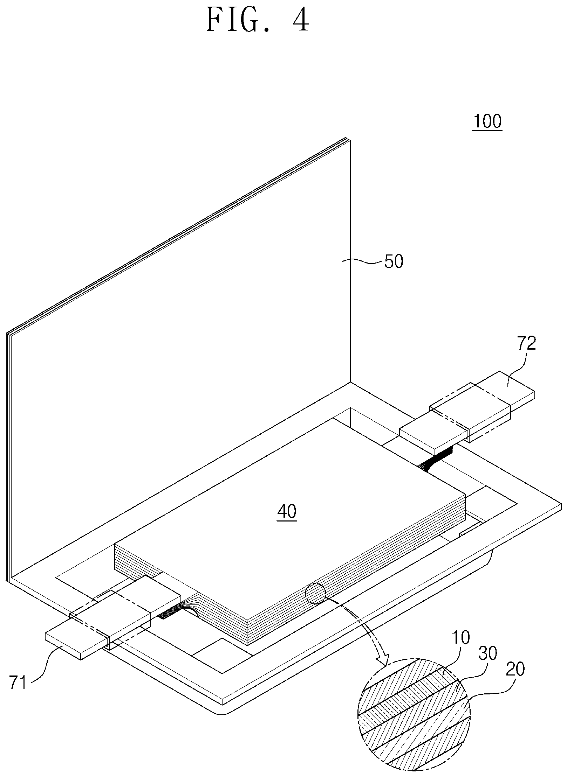

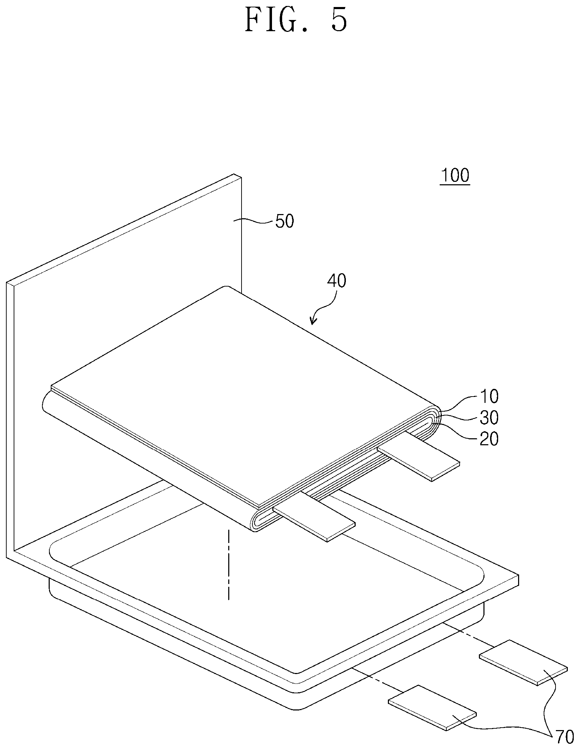

The rechargeable lithium battery may be classified into cylindrical, prismatic, pouch, coin-type batteries, and/or the like, depending on their shape. FIGS. 2 to 5 are schematic views illustrating a rechargeable lithium battery according to one or more embodiments of the present disclosure. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72, serving as an electrical path for conducting the current formed in the electrode assembly 40 to the outside.

The rechargeable lithium battery according to one or more embodiments may be applied to automobiles, mobile phones, and/or various types of electric devices, as non-limiting examples.

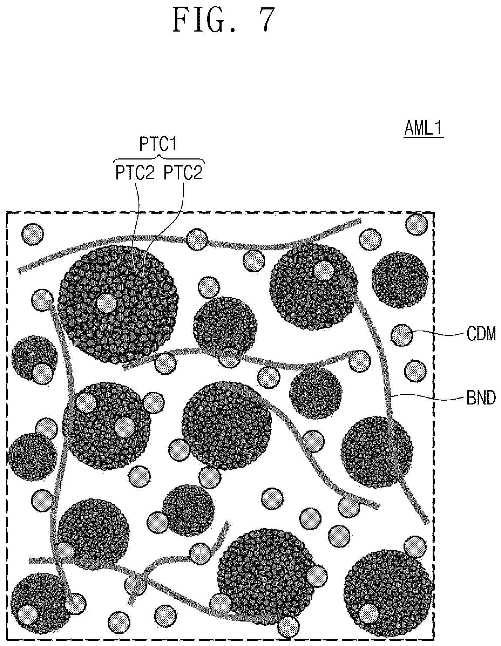

FIGS. 6 and 7 are enlarged views of a positive electrode active material layer of a rechargeable lithium battery according to one or more embodiments of the present disclosure. Referring to FIGS. 6 and 7, the positive electrode active material layer AML1 (see, *e.g.*, FIG. 1) may include a first particle PTC1, a conductive material CDM, and a binder BND. A plurality of first particles PTC1 may constitute a positive electrode active material according to one or more embodiments of the present disclosure.

The positive electrode active material layer AML1 may further include an additive that may serve as a sacrificial positive electrode.

An amount of the positive electrode active material PTC1 in the positive electrode active material layer AML1 may be about 90 wt% to about 99 wt% with respect to 100 wt% of the positive electrode active material layer AML1. An amount of each of the binder and the conductive material may be about 0.5 wt% to about 5 wt% with respect to 100 wt% of the positive electrode active material layer AML1.

The binder may serve to bind (*e.g.*, effectively bind) the positive electrode active material particles to each other and also to bind (*e.g.*, effectively bind) the positive electrode active material to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but the present disclosure is not limited thereto.

The conductive material may be used to impart conductivity to the electrode (e.g., may be an electron conductor). Any material that does not cause chemical change and that conducts electrons may be used in the battery. Examples of the conductive material may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like, in a form of a metal powder or a metal fiber; a conductive polymer such as a polyphenylene derivative; and/or a (*e.g.*, any suitable) mixture thereof.

Hereinafter, the first particle PTC1 will be described in more detail.

**First Particle PTC1**

The first particle PTC1 (*e.g.*, each of the first particles PTC1) may include an olivine-based lithium compound represented by Formula 1.

$$\text{Formula 1} \qquad Li_aMn_xFe_{1-x}M_yPO_{4-b}$$

In Formula 1 above, $0.8 \le a \le 1.2$, $0.2 \le x \le 0.8$, $0 \le y \le 0.05$, and $0 \le b \le 0.05$ are satisfied. For example, x may be about 0.5 to about 0.8, or about 0.5 to about 0.7. M is at least one element selected from the group consisting of Al, Mg, Zr, V, Zn, Nb, K, Y, B, and Cu, and, for example, M may be Mg or V. M may be a dopant doped into the first particle PTC1.

The first particle (*e.g.*, each of the first particles PTC1) further includes titanium (Ti), and Ti may also be a dopant doped into the first particle PTC1. When Ti is used as a dopant, crystallinity of Mn and Fe, included in the positive electrode active material, may be increased, so that the structure of the active material may be strengthened, and the sizes of single particles or primary particles may be controlled or selected to be substantially uniform. In one or more embodiments, doped Ti may reduce the powder resistivity of the positive electrode active material and thus improve electrical conductivity of a rechargeable lithium battery, and may improve charge-discharge efficiency and low-temperature and lifespan characteristics of the rechargeable lithium battery. The first particle may have a powder resistivity of about 10 $\Omega$-cm to about 90 $\Omega$-cm. The powder resistivity of the positive electrode active material can be determined using the following methods:

Powder resistivity can be measured using a four-probe resistivity meter or a compression cell. The measurement process may involve placing the powder between the electrodes or filling a measurement cell. The powder may then be compressed under a controlled pressure (e.g., 1 MPa to 10 MPa) to ensure consistent contact.

Once the powder is properly compressed, a current is applied, and the voltage can be measured to determine the resistance. The resistance (R) is calculated using Ohm's law:

$$R = \frac{V}{I}$$

Using this resistance value, the powder resistivity ($\rho$) is determined using the following equation:

$$\rho = R \times \frac{A}{L}$$

where A is the cross-sectional area of the electrode (m$^2$), and L is the distance between electrodes or the thickness of the compressed powder layer (m).

To enhance measurement accuracy, multiple measurements should be conducted, and the results averaged to minimize variability. By measuring resistivity under different pressures, the electrical properties of the powder, including its conductivity behavior, can be effectively evaluated.

The single particle and the primary particle will be described in more detail as follows.

A doping amount of Ti may be about 1000 ppm to about 9000 ppm, or about 3000 ppm to about 6000 ppm. In this context, "ppm" (parts per million) refers to the concentration of titanium (Ti) in the first particle relative to the total weight of metals other than lithium in the compound. This refers to that the amount of titanium is measured as a fraction of the total weight of the other metal elements (such as manganese, iron, and any dopant elements) present in the first particle. The doping amount of Ti may be defined as the weight of Ti element with respect to the total weight of metals other than lithium of the olivine-based lithium compound represented by Formula 1. For example, the doping amount of Ti may be defined as the weight of Ti with respect to the total weight of Fe, Mn, M and Ti that are the above-mentioned doping elements. When the doping amount of Ti falls within the above-described ranges, electrical conductivity, lifespan characteristics, and/or the like may be improved without decreasing the capacity of the positive electrode active material.

The first particle PTC1 (e.g., each of the first particles PTC1) includes at least one primary particle. The primary particles may have an average size of about 50 nm to about 300 nm, or about 100 nm to about 200 nm. Because Ti is used as a dopant, the sizes of the primary particles may be controlled or selected to be substantially uniform in the above-described ranges, which may result in decreasing the moving distance of lithium ions in the particle during charging and discharging, thereby reducing the resistance and increasing the capacity. In one or more embodiments, due to the substantially uniform primary particles, an increase in powder rolling density, a decrease in side reactions with the electrolyte solution, and an improvement in lifespan may be achieved.

In one or more embodiments, the first particle PTC1 (e.g., each of the first particles PTC1) may include a coating layer on a surface thereof. The coating layer may cover the entire surface of the first particle PTC1, or may cover a portion of the surface of the first particle PTC1. For example, the coating layer may include carbon and/or a carbon-containing compound. The first particles PTC1 may have improved structural stability and electrical conductivity due to the coating layer.

The coating layer may further include at least one selected from the group consisting of a titanium-containing compound, a magnesium-containing compound, and a vanadium-containing compound. A metal-containing compound, such as the titanium-containing compound, the magnesium-containing compound, and the vanadium-containing compound, may be, for example, a metal oxide, a metal hydroxide, a metal carbonate, and/or a composite or mixture thereof. The metal-containing compound may further include another metal or non-metal element. For example, the metal-containing compound may further include lithium.

The first particles PTC1 may further include carbon derived from the above-described coating layer and/or a grain boundary coating layer. An amount of carbon element in the first particle PTC1 may be about 0.5 wt% to about 10 wt%, about 1 wt% to about 5 wt%, or about 1 wt% to about 2.5 wt%. In this context, "wt%" (weight percent) refers to the concentration of carbon in the first particle PTC1 relative to the total weight of the first particle PTC1. This refers to that the amount of carbon is measured as a fraction of the total weight of the first particle PTC1, including all its components.

The first particles PTC1 may have a first average particle diameter. The first average particle diameter may vary according to one or more embodiments of FIG. 6 or FIG. 7.

In one or more embodiments, referring back to FIG. 6, the first particle PTC1 (e.g., each of the first particles PTC1) may have (e.g., be in) a single particle form (e.g., each being a monolithic particle). In this specification, the single particle may refer to one particle that exists alone without a grain boundary therein. In terms of morphology, the single particle may refer to one particle, a monolithic structure, a single unitary structure, or a non-aggregated (e.g., non-agglomerated) particle, existing as an independent phase in which particles do not aggregate with each other. For example, the single particle may be a single crystal. The single particle may be independently separated (e.g., may be separated into independent particles). Alternatively, in one or more embodiments, the first particle may be a particle containing a few crystals. Alternatively, in one or more embodiments, the first particle may be in a form of having about 2 to about 100 single particles bound to each other. Alternatively, in one or more embodiments, the first particle may have a form of having a plurality of primary particles aggregated (e.g., agglomerated) with each other (e.g., be in a form of secondary particles each being an agglomeration of a plurality of primary particles).

Referring to FIG. 6, if (e.g., when) the first particles PTC1 each have (e.g., be in) a single particle form (e.g., a monolithic form), the first particles PTC1 may exist as one primary particle, or the first particles PTC1 may each exist (or be) in the form of having several primary particles bound (or attached) to each other. In this case, the minimum particle diameter of the first particles PTC1, which is the average size of the primary particles, may be about 50 nm to about 300 nm, or about 100 nm to about 200 nm. The average size of the primary particles may refer to an average value obtained by measuring particle diameters of about 30 primary particles randomly selected from an electron micrograph. When the first particles PTC1 each have a single particle form, the first particles PTC1 may be provided in various sizes. For example, the average particle diameter of the first particles PTC1 may range from about 0.2 $\mu$m to about 2.5 $\mu$m, about 0.5 $\mu$m to about 2.5 $\mu$m, or be about 1 $\mu$m. In one or more embodiments, the average particle diameter can be measured using a particle size analyzer based on a laser diffraction method. Specifically, the average particle diameter may refer to the diameter (D50) of particles at a cumulative volume of 50 vol% in the particle size distribution.

In other embodiments, referring back to FIG. 7, the first particles PTC1 may each be in a form of a polycrystal, and may include a secondary particle in which at least two primary particles are aggregated (*e.g.*, agglomerated). In other words, the first particles PTC1 may each include a plurality of second particles (primary particles) PTC2 that are aggregated (*e.g.*, agglomerated) with each other. For example, the second particles PTC2 may each be a primary particle. The first particles PTC1 may each have a sphere or oval shape.

In one or more embodiments, the first particles PTC1 may further include a grain boundary coating layer on surfaces of the second particles PTC2. The grain boundary coating layer may be present inside the first particles PTC1. The grain boundary coating layer may be formed along an interface between the second particles PTC2 inside the first particles PTC1. For example, the grain boundary coating layer may refer to a material applied to the grain boundary inside the first particles PTC1. The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the first particle PTC1 (*e.g.*, of each of the first particles PTC1) may refer to an entire inner region of the first particle PTC1 excluding the surface of the first particle PTC1. For example, the inside of the first particle PTC1 may refer to an entire inner region from about 10 nm depth from the outer surface of the first particle PTC1, or a region from about 10 nm depth to about 2 $\mu$m depth from the outer surface of the first particle PTC1.

Because the first particles PTC1 may further include a grain boundary coating layer, structural stability may be strengthened, and a coating layer may be formed uniformly (*e.g.*, substantially uniformly) on the surface of each of the first particles PTC1. In one or more embodiments, because the first particles PTC1 may further include the grain boundary coating layer, the electrical conductivity of the first particle PTC1 may be further improved.

Referring to FIG. 7, if (*e.g.*, when) the first particle PTC1 is a secondary particle (*e.g.*, if/when each of the first particles PTC1 is a secondary particle (*i.e.*, they are in a secondary particle form), the average size of the primary particles (for example, PTC2) in each of the first particles PTC1 may be about 50 nm to about 300 nm, about 50 nm to about 200 nm or about 50 nm to about 150 nm. If (*e.g.*, when) the first particle PTC1 is a secondary particle (*e.g.*, if/when each of the first particles PTC1 is a secondary particle, *i.e.*, when the first particles PTC1 are in a secondary particle form), the average size of the primary particles may be smaller than it is if (*e.g.*, when) the first particle PTC1 is a single particle (in a single particle form). The average size of the primary particles may refer to an average value obtained by measuring particle diameters of about 30 primary particles randomly selected from an electron micrograph.

When the first particle PTC1 is a secondary particle (*e.g.*, if/when each of the first particles PTC1 is a secondary particle), the average particle diameter of the first particle PTC1 may be about 1 $\mu$m to about 20 $\mu$m, about 3 $\mu$m to about 15 $\mu$m, or about 5 $\mu$m to about 10 $\mu$m. In one or more embodiments, the average particle diameter can be measured using a particle size analyzer based on a laser diffraction method. Specifically, the average particle diameter may refer to the diameter (D50) of particles at a cumulative volume of 50 vol% in the particle size distribution.

When the average particle diameter of the first particle falls within the above-described ranges, and the above-described primary particles have a substantially uniform size, the rechargeable lithium battery including the same may have improved charge-discharge capacity and low-temperature capacity.

The first particles PTC1 may each have a sphere shape in which the nano-sized primary particles are aggregated (*e.g.*, agglomerated). With the primary particles being closely aggregated (*e.g.*, agglomerated) with each other, the first particles PTC1 may have the following characteristics. The first particles PTC1 may each have a sphere or oval shape. The average particle diameter (D50) of the first particles PTC1 may be about 1 $\mu$m to about 20 $\mu$m. The first particles PTC1 may have a porosity of about 20% to about 60%. Porosity may be defined as the pore volume divided by the total volume of a particle. The span value ((D90 - D10) / D50), obtained by analysis on the first particle PTC1 with a particle size analyzer, may be about 0.5 to about 7.

In one or more embodiments, the first particle PTC1 may exist in either a single particle form or a secondary particle form. In the single particle form, the first particle PTC1 may be a monolithic structure without grain boundaries, often a single crystal, and exists independently without aggregation, resulting in larger single or primary particles. Conversely, in the secondary particle form, the first particle PTC1 may be composed of multiple primary particles aggregated together, forming a polycrystal structure with smaller primary particles. The single particle form typically has primary particles ranging from about 50 nm to 300 nm, while the secondary particle form includes primary particles that are closely packed, resulting in a larger overall particle size. The presence of titanium as a dopant in PTC1 helps control the size and uniformity of these primary particles, enhancing the material's electrical conductivity and stability.

A rechargeable lithium battery including the positive electrode active material according to one or more embodiments of the present disclosure may have improved low-temperature characteristics. In one or more embodiments, a discharge capacity of the rechargeable lithium battery at about -20 °C compared with an initial discharge capacity thereof (discharge capacity at about -20 °C/initial discharge capacity) may be about 60% or greater. For example, the discharge capacity at about -20 °C compared with the initial discharge capacity (discharge capacity at about -20 °C/initial discharge capacity) of the rechargeable lithium battery, according to one or more embodiments of the present disclosure, may be about 40% to about 100%, about 50% to about 95%, or about 60% to about 90%.

A rechargeable lithium battery including the positive electrode active material, according to one or more embodiments of the present disclosure, may have improved lifespan characteristics. In one or more embodiments, the rechargeable lithium battery according to one or more embodiments of the present disclosure may have a capacity retention rate of at least about 94% after about 50 cycles of charging and discharging with a constant current of about 1.0 C at the above-described voltage. For example, a capacity retention rate may be at least about 94% after about 50 times of charging and discharging with a constant current of about 1 C at a voltage of about 2.5 V to about 4.45 V. For example, the capacity retention rate may be about 92% to about 100%, or about 94% to about 100%.

**Preparation Method of Positive Electrode Active Material**

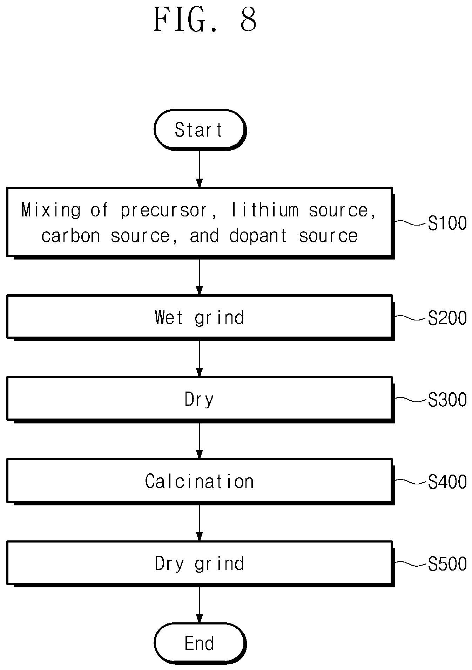

FIG. 8 is a flowchart showing a preparation method of a positive electrode active material according to one or more embodiments of the present disclosure. Referring to FIG. 8, preparation of a first particle PTC1 according to one or more embodiments of the present disclosure will be described in more detail.

A manganese iron phosphate precursor, a lithium source, a carbon source, and a dopant source may be added to a solvent and mixed (S100). For example, the solvent may be water, ethanol, and/or the like.

The manganese iron phosphate precursor may be a compound containing all of manganese (Mn), iron (Fe), and phosphorus (P); a mixture of a manganese (Mn)-containing compound and an iron (Fe) and phosphorus (P)-containing compound; and/or a (e.g., any suitable) mixture of a manganese (Mn)-containing compound, an iron (Fe)-containing compound, and a phosphorus (P)-containing compound. For example, the manganese iron phosphate precursor may include $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.5 to about 0.8.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include an oxide of Ti or a chloride of Ti in Formula 1. The dopant source may further include an oxide or chloride of Mg, V, or B.

Wet grinding may be performed on the mixture (S200). For the wet grinding, a general wet mill capable of temperature control may be used. In particular, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the present disclosure, the wet grinding (S200) may also not be provided. For example, in order to maximize or increase the average particle diameter of the first particle PTC1 to be finally prepared, the wet grinding (S200) of precursor particles may not be provided.

The solvent may be removed from the mixture to form a dried mixture (S300).

When preparing the first particle PTC1 in FIG. 6, according to one or more embodiments of the present disclosure, the forming of the dried mixture may include performing direct evaporation on the mixture. For example, the direct evaporation may include static drying or spray drying.

When preparing the first particle PTC1 in FIG. 7, according to another one or more embodiments of the present disclosure, the forming of the dried mixture may include performing spray drying of the mixture. A generally used spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet-grinding process, may be aggregated (e.g., agglomerated) with each other through the spray-drying process to thereby form a secondary particle. Therefore, by adjusting the flow amount and flow rate of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (e.g., amount) (TSC) of about 20% to about 40%. The total solid content (e.g., amount) may refer to a converted value to percentage of the weight of a solid material remaining after solvent evaporation (that is, dried mixture) with respect to the total weight of the mixture (that is, spray liquid). For example, the spray liquid may have a total solid content (e.g., amount) of about 30 wt%.

When the total solid content (*e.g.*, amount) is less than about 20%, disadvantages in that an average particle diameter of the first particle PTC1 decreases and productivity is reduced may be caused. When the total solid content (*e.g.*, amount) is greater than about 40%, adjusting the average particle diameter of the first particle PTC1 may become difficult, and size difference between the first particles PTC1 may increase.

The spray liquid according to one or more embodiments having the above-mentioned total solid content (*e.g.*, amount) may have a viscosity of about 1500 mPa·s to about 2500 mPa·s. For example, the spray liquid may have a viscosity of about 2000 mPa·s.

In one or more embodiments, an input rate for spray drying may be about 0.1 kg/min to about 0.9 kg/min. The input rate for spray drying may be defined as the weight of water and raw material mixture added per minute. In one or more embodiments, the input rate for spray drying according to one or more embodiments of the present disclosure may be about 0.5 kg/min.

In one or more embodiments, the spray drying may be performed at a temperature of about 100 °C to about 300 °C. For example, the spray drying may be performed at a temperature of about 200 °C to about 300 °C, at a temperature higher than about 200 °C and lower than or equal to about 300 °C, or at a temperature of about 230 °C to about 270 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, the input pressure of the spray liquid may be about 0.5 MPa.

When the input rate, the input pressure, and the temperature for the spray drying fall within the above-described ranges, respectively, the first particle PTC1 may have a sphere shape and a desired or suitable porosity.

The spray liquid for the spray drying may have a flow rate of about 30 mL/min to about 80 mL/min. When the flow rate is less than about 30 mL/min, disadvantages of nozzle clogging, reduced productivity, and/or the like may be caused. When the flow rate is greater than about 80 mL/min, due to moisture condensation in the spray-drying device, the mixture may not be dried completely. The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The calcination may be performed in total two times, and the first calcination process may be performed at a temperature of about 300 °C to about 600 °C. The execution time (*e.g.*, the duration) of the calcination process may be about 1 hour to about 10 hours, or about 2 hours to about 6 hours. Immediately afterwards, the second calcination process may be performed at a temperature of about 600 °C to about 800 °C. The execution time (*e.g.*, the duration) of the second calcination process may be about 4 hours to about 24 hours, or about 6 hours to about 20 hours. As the dried mixture is calcined, the first particle PTC1 containing the compound represented by Formula 1, previously described, may be formed.

Dry grinding may be performed on the calcined first particle PTC1 (S500). The calcined mixture may be ground using an air jet mill, and/or the like.

In preparation of the first particles PTC1 in FIG. 6, according to one or more embodiments of the present disclosure, the calcined mixture may be ground at a rotation speed of at least about 7000 rpm. For example, the calcined mixture may be ground at a rotation speed of about 7000 rpm to about 10000 rpm, or about 7500 rpm to about 9000 rpm. Accordingly, the first particles PTC1 may have a form of a single particle as illustrated in FIG. 6.

In preparation of the first particles PTC1 in FIG. 7, according to other embodiments of the present disclosure, the calcined mixture may be ground at a rotation speed of about 0 rpm to about 7000 rpm. For example, the calcined mixture may be ground at a rotation speed of about 4000 rpm to about 7000 rpm, about 4000 rpm to about 6000 rpm, or about 4500 rpm to about 5000 rpm. Unlike the preparation of the positive electrode active material in FIG. 6, the grinding after calcination (S500) may be performed under relatively mild conditions. In the preparation of the positive electrode active material in FIG. 7, for example, the dry grinding (S500) may also not be provided. When the rotation speed in the grinding (S500) falls within the above-mentioned ranges, the first particles PTC1 may be maintained to have a form of secondary particles. Accordingly, the first particles PTC1 may have the form of the secondary particles as illustrated in FIG. 7.

In the preparation of the first particles PTC1 in FIG. 7, according to one or more embodiments of the present disclosure, a carbon source may be introduced to a manganese iron phosphate precursor to form a carbon coating layer uniformly (e.g., substantially uniformly) on surfaces of primary particles. Thereafter, the primary particles may be closely aggregated (*e.g.*, agglomerated), through the spray drying, to form dense sphere-shaped secondary particles. As a result, the first particles PTC1 may include the stable carbon coating layer in the outside and inside of the first particles PTC1, and may thus have a relatively high carbon content (*e.g.*, amount). Due to the high carbon content (*e.g.*, amount) of the first particles PTC1 in FIG. 7, the positive electrode active material layer AML1 may have improved conductivity.

Analysis on a carbon element according to one or more embodiments of the present disclosure may be performed using an Elementar Micro Cube elemental analyzer. The specific operation method and conditions are as follows. A sample of about 1 mg to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide can then be detected using a thermal conductivity detector (TCD). After detecting carbon dioxide ($CO_2$) using a thermal conductivity After detecting carbon dioxide ($CO_2$) using a thermal conductivity detector (TCD), the carbon content can be determined by converting the detected $CO_2$ amount into its corresponding carbon concentration. This conversion can be performed using a calibration curve established with standard reference materials of known carbon concentrations, ensuring an accurate correlation between detector response and carbon content. The carbon content may then be calculated using the following formula:

$$\text{Carbon Content}(\%) = \frac{\text{Mass of detected CO}_2 \times \text{Atomic weight of C}}{\text{Molecular weight of CO}_2 \times \text{Sample mass}} \times 100$$

The final carbon content can be expressed as a percentage of the total sample mass. If necessary, blank sample measurements can be used to correct for background signals, thereby improving accuracy.

Scanning electron microscope-energy dispersive X-ray spectroscopy (SEM-EDS) and quantitative analyses on a particle surface may be conducted to measure the carbon and Ti contents according to one or more embodiments of the present disclosure. In addition to SEM-EDS, inductively coupled plasma-mass spectrometry (ICP-MS), inductively coupled plasma optical emission spectroscopy (ICP-OES), and/or the like may be used to measure the Ti content (*e.g.*, amount). For example, amount of Ti in the first particle may be measured using Scanning Electron Microscopy-Energy Dispersive X-ray Spectroscopy (SEM-EDS). For analysis, the first particle sample can be dried and then fixed onto an SEM holder using conductive tape or epoxy. The SEM can be used to observe the particle structure and select the area for analysis. EDS may then be used to detect the Ti-K$\alpha$ (~4.51 keV) and Ti-K$\beta$ (~4.93 keV) peaks to confirm the presence of Ti. Based on the acquired EDS spectrum, background correction and ZAF correction can be performed to quantify the Ti content. If necessary, Elemental Mapping or Line Scan analysis can be conducted to visualize the Ti distribution. Finally, the Ti content can be evaluated by converting the measured weight percentage (Weight %) to parts per million (ppm), and its accuracy can be verified by comparison with standard reference materials.

Hereinafter, the present disclosure will be described in more detail with reference to Examples. However, the following examples are merely presented to illustrate embodiments of the present disclosure, and the scope of the present disclosure is not limited thereto.

**Example 1: Preparation of Positive Electrode Active Material Particle in the Form of a Single Particle**

A manganese iron phosphate precursor ($Mn_{0.6}Fe_{0.4}PO_4$), lithium carbonate, and titanium dioxide were mixed in a molar ratio of about 1:1.03:0.001. With respect to the total weight of metals other than lithium of the mixture, 1000 ppm of titanium dioxide was added. 10 wt% of glucose was further added to the mixture. Wet grinding was performed on the mixture by ball milling. The mixture was dried over evaporation on a tray by heating, and then dried in a vacuum oven at about 85 °C for about 4 hours. The dried mixture was calcined in a nitrogen atmosphere at about 450 °C for about 4 hours, and then calcined at about 700 °C for about 12 hours. The calcined product was ground at a rotation speed of about 8000 rpm to obtain first particles in the form of single particles (*e.g.*, monolithic particles).

In other words, Example 1 describes the preparation of positive electrode active material particles in the form of single particles. A mixture of manganese iron phosphate precursor ($Mn_{0.6}Fe_{0.4}PO_4$), lithium carbonate, and (1000 ppm) titanium dioxide (in a molar ratio of 1:1.03:0.001) was combined with 10 wt% of glucose. This mixture underwent wet grinding via ball milling, followed by drying through evaporation and in a vacuum oven at 85°C for 4 hours. The dried mixture was then calcined in a nitrogen atmosphere at 450°C for 4 hours and subsequently at 700°C for 12 hours. Finally, the calcined product was ground at 8000 rpm to produce the first particles in the form of single, monolithic particles.

**Example 2**

A positive electrode active material was prepared in substantially the same manner as that of Example 1 except that a manganese iron phosphate precursor ($Mn_{0.6}Fe_{0.4}PO_4$), lithium carbonate, and titanium dioxide were mixed in a molar ratio of about 1:1.03:0.003, and 3000 ppm of titanium dioxide, with respect to the total weight of metals other than lithium of the mixture, was added.

**Example 3**

A positive electrode active material was prepared in substantially the same manner as that of Example 1 except that a manganese iron phosphate precursor ($Mn_{0.6}Fe_{0.4}PO_4$), lithium carbonate, and titanium dioxide were mixed in a molar ratio of about 1:1.03:0.006, and 6000 ppm of titanium dioxide, with respect to the total weight of metals other than lithium of the mixture, was added.

**Example 4**

A positive electrode active material was prepared in substantially the same manner as that of Example 1 except that a manganese iron phosphate precursor ($Mn_{0.6}Fe_{0.4}PO_4$), lithium carbonate, and titanium dioxide were mixed in a molar ratio of about 1:1.03:0.009, and 9000 ppm of titanium dioxide, with respect to the total weight of metals other than lithium of the mixture, was added.

**Example 5**

A positive electrode active material was prepared in substantially the same manner as that of Example 1 except that a manganese iron phosphate precursor ($Mn_{0.5}Fe_{0.5}PO_4$), lithium carbonate, and titanium dioxide were mixed in a molar ratio of about 1:1.03:0.003, and 3000 ppm of titanium dioxide, with respect to the total weight of metals other than lithium of the mixture, was added.

**Example 6**

A positive electrode active material was prepared in substantially the same manner as that of Example 1 except that a manganese iron phosphate precursor ($Mn_{0.5}Fe_{0.5}PO_4$), lithium carbonate, and titanium dioxide were mixed in a molar ratio of about 1:1.03:0.006, and 6000 ppm of titanium dioxide, with respect to the total weight of metals other than lithium of the mixture, was added.

**Comparative Example 1**

A positive electrode active material was prepared in substantially the same manner as that of Example 1 except that a manganese iron phosphate precursor ($Mn_{0.6}Fe_{0.4}PO_4$) and lithium carbonate, without titanium dioxide, were mixed in a molar ratio of about 1:1.03.

**Comparative Example 2**

A positive electrode active material was prepared in substantially the same manner as that of Example 1 except that a manganese iron phosphate precursor ($Mn_{0.5}Fe_{0.5}PO_4$) and lithium carbonate, without titanium dioxide, were mixed in a molar ratio of about 1:1.03.

**Comparative Example 3**

A positive electrode active material was prepared in substantially the same manner as that of Example 1 except that a manganese iron phosphate precursor ($Mn_{0.6}Fe_{0.4}PO_4$), lithium carbonate, and titanium dioxide were mixed in a molar ratio of about 1:1.03:0.0005, and 500 ppm of titanium dioxide, with respect to the total weight of metals other than lithium of the mixture, was added.

**Comparative Example 4**

A positive electrode active material was prepared in substantially the same manner as that of Example 1 except that a manganese iron phosphate precursor ($Mn_{0.6}Fe_{0.4}PO_4$), lithium carbonate, and titanium dioxide were mixed in a molar ratio of about 1:1.03:0.01, and 10000 ppm of titanium dioxide, with respect to the total weight of metals other than lithium of the mixture, was added.

**Comparative Example 5**

A positive electrode active material was prepared in substantially the same manner as that of Example 1 except that a manganese iron phosphate precursor ($Mn_{0.5}Fe_{0.5}PO_4$), lithium carbonate, and titanium dioxide were mixed in a molar ratio of about 1:1.03:0.0005, and 500 ppm of titanium dioxide, with respect to the total weight of metals other than lithium of the mixture, was added.

**Comparative Example 6**

A positive electrode active material was prepared in substantially the same manner as that of Example 1 except that a manganese iron phosphate precursor ($Mn_{0.5}Fe_{0.5}PO_4$), lithium carbonate, and titanium dioxide were mixed in a molar ratio of about 1:1.03:0.01, and 10000 ppm of titanium dioxide, with respect to the total weight of metals other than lithium of the mixture, was added.

Table 1

| Classification | Average size of primary particle (nm) | Doped Ti (ppm) | Powder resistivity ($\Omega$-cm) |
|---|---|---|---|
| Example 1 | 300 | 1,000 | 74 |
| Example 2 | 200 | 3,000 | 66 |
| Example 3 | 100 | 6,000 | 18 |
| Example 4 | 50 | 9,000 | 31 |
| Example 5 | 180 | 3,000 | 50 |
| Example 6 | 120 | 6,000 | 11 |
| Comparative Example 1 | 500 | 0 | 152 |
| Comparative Example 2 | 500 | 0 | 134 |
| Comparative Example 3 | 400 | 500 | 124 |
| Comparative Example 4 | 40 | 10,000 | 63 |
| Comparative Example 5 | 400 | 500 | 117 |
| Comparative Example 6 | 40 | 10,000 | 52 |

Referring to Table 1, it can be seen that, in case of Examples 1 to 6 where the amount of Ti is about 1000 ppm to about 9000 ppm, the size of the primary particle is adjusted to about 50 nm to about 300 nm. In addition, it can be seen that, when the size of the primary particle falls within the above-described ranges, the powder resistivity has a value smaller than about 75 $\Omega$-cm.

**Evaluation Example 1: Surface Analysis of Positive Electrode Active Material**

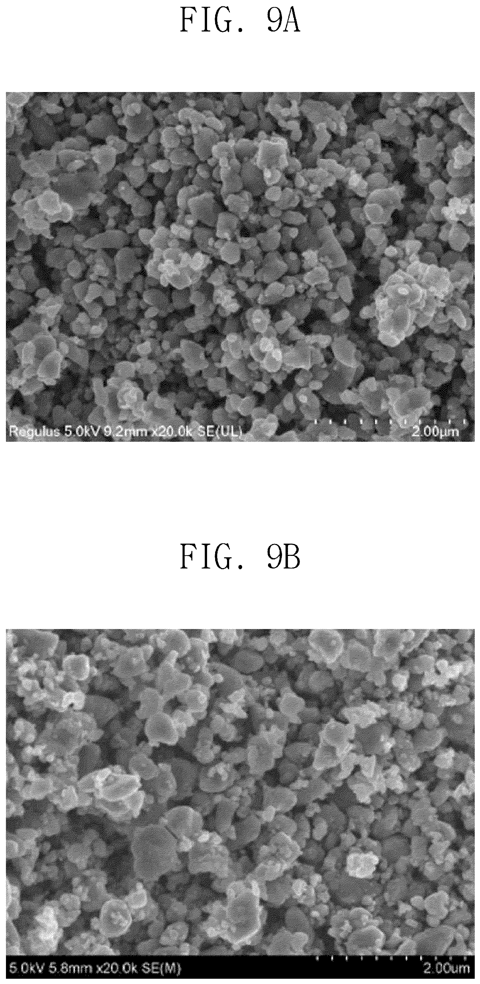

FIG. 9A shows a scanning electron microscope (SEM) image of the first particles prepared according to Example 1. FIG. 9B shows a SEM image of the first particles prepared according to Comparative Example 3. Referring to FIGS. 9A and 9B, it can be seen that the primary particle according to Example 1 is formed smaller in size, and formed uniformly (*e.g.*, substantially uniformly).

**Manufacture of Rechargeable Lithium Battery**

Positive electrodes using the above positive electrode active materials and a lithium metal counter electrode, as a counter electrode, were used to prepare a 2032-type (kind) coin half-cell. 95 wt% of each final positive electrode active material, 3 wt% of a polyvinylidene fluoride binder, and 2 wt% of a carbon black conductive material were mixed in an N-methylpyrrolidone solvent to prepare positive electrode active material slurries. The positive electrode active material slurries were each applied to an aluminium current collector and dried, and then rolling was performed to prepare positive electrodes.

For each positive electrode, a separator (thickness: about 16 $\mu$m) formed of a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethyl methyl carbonate (EMC), and dimethyl carbonate (DMC) in a volume ratio of about 3:4:3 was used as an electrolyte.

**Evaluation Example 2: Evaluation on Battery Characteristics**

Characteristics of the rechargeable lithium batteries prepared using the positive electrode active materials according to Examples 1 to 6 and Comparative Examples 1 to 6 were evaluated.

For initial charging and discharging, each rechargeable lithium battery was initially charged under conditions of a constant current (0.2 C) and a constant voltage (4.45 V), was rested for about 10 minutes and then discharged with a constant current (0.2 C) until a voltage reached 2.5 V. Thereafter, the charging and discharging cycle was performed at about -20 °C under about 0.2 C/0.2 C conditions. Thereafter, the charging and discharging cycle was repeated 50 times at about 45 °C under about 1.0 C/1.0 C conditions. The average voltage and the capacity at about 45 °C were measured while repeating the charging and discharging cycle. The results of evaluating the battery characteristics were listed in Table 2.

Table 2

| Classification | Charge amount at 4.5 V (mAh/g) | Discharge amount at 4.5 V (mAh/g) | Efficiency at 4.5 V (%) | Discharge capacity at -20 °C (mAh/g) | High-temperature lifespan at 50 cycles (%) |
|---|---|---|---|---|---|
| Example 1 | 151.5 | 144.6 | 95.4 | 102.2 | 94.8 |
| Example 2 | 153.4 | 146.8 | 95.7 | 103.7 | 98.7 |
| Example 3 | 156.6 | 149.1 | 95.3 | 107.1 | 99.4 |
| Example 4 | 154.7 | 147.6 | 95.4 | 106.3 | 99.0 |
| Example 5 | 156.4 | 149.7 | 95.7 | 104.8 | 99.5 |
| Example 6 | 157.2 | 150.6 | 95.8 | 106.4 | 99.8 |
| Comparative Example 1 | 146.0 | 139.2 | 95.4 | 92.4 | 93.8 |
| Comparative Example 2 | 148.7 | 142.1 | 95.6 | 95.8 | 95.3 |
| Comparative Example 3 | 148.8 | 142.2 | 95.6 | 97.3 | 93.9 |
| Comparative Example 4 | 152.2 | 145.1 | 95.4 | 101.0 | 96.8 |
| Comparative Example 5 | 151.4 | 145.3 | 95.9 | 102.8 | 96.7 |
| Comparative Example 6 | 152.6 | 145.9 | 95.6 | 103.2 | 96.9 |

Referring to Table 2, it can be seen that the rechargeable batteries according to Examples 1 to 6 have excellent or suitable low-temperature capacities and lifespan characteristics. In particular, it can be seen that the rechargeable batteries according to Examples 1 to 6 have similar or higher capacities at about -20 °C to/than the rechargeable batteries according to Comparative Examples 1 to 6. In addition, it can be seen that the rechargeable batteries according to Examples 2 to 6 have high-temperature lifespan characteristics of at least about 98%, and have higher values than the rechargeable batteries according to Comparative Examples 1 to 6.

A positive electrode active material according to one or more embodiments of the present disclosure may have improved electrical conductivity, capacity, and energy density. A rechargeable lithium battery according to one or more embodiments of the present disclosure may have improved low-temperature and lifespan characteristics.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The portable device, vehicle, and/or the battery, *e.g.*, a battery controller, a device for manufacturing the active material or battery, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

**Claims**

1. A positive electrode active material comprising:
   a first particle comprising:

   titanium (Ti) in an amount of about 1000 ppm to about 9000 ppm;
   at least one primary particle, the primary particle having a size of about 50 nm to about 300 nm; and
   a compound represented by Formula 1:

   $$\text{Formula 1} \qquad \text{Li}_a\text{Mn}_x\text{Fe}_{1-x}\text{M}_z\text{PO}_{4-b}$$

   wherein, in Formula 1, $0.8 \leq a \leq 1.2$, $0.2 \leq x \leq 0.8$, $0 \leq z \leq 0.05$, $0 \leq b \leq 0.05$, and M is at least one element selected from the group consisting of aluminium (Al), magnesium (Mg), zirconium (Zr), vanadium (V), zinc (Zn), niobium (Nb), potassium (K), yttrium (Y), boron (B), and copper (Cu).

2. The positive electrode active material of claim 1, wherein x is about 0.5 to about 0.8.

3. The positive electrode active material of claim 1 or claim 2, wherein M is Mg or V.

4. The positive electrode active material of any one of claims 1 to 3, wherein the first particle comprises a coating layer containing carbon, and an amount of carbon in the first particle is about 1.0 wt% to about 2.5 wt%.

5. The positive electrode active material of any one of claims 1 to 4, further comprising a plurality of first particles which comprises the first particle, wherein each of the first particles has a single particle form and a first average particle diameter of the first particles is about 0.2 $\mu$m to about 2.5 $\mu$m.

6. The positive electrode active material of any one of claims 1 to 4, wherein the first particle comprises a plurality of primary particles agglomerated with each other, and
a second average particle diameter of the first particle is about 1 $\mu$m to about 20 $\mu$m.

7. The positive electrode active material of claim 6, further comprising a plurality of first particles which comprises the first particle, and wherein the primary particles have an average size of about 50 nm to about 200 nm.

8. The positive electrode active material of claim 6 or claim 7, wherein the first particle further comprises a grain boundary coating layer on an interface between the plurality of primary particles, and the grain boundary coating layer contains carbon.

9. The positive electrode active material of any one of claims 6 to 8, wherein the first particle has a porosity of about 20% to about 60%.

10. The positive electrode active material of any one of claims 6 to 9, further comprising a plurality of first particles which comprises the first particle, and wherein a span value, obtained by analysis of the first particles with a particle size analyzer, is about 0.5 to about 7.

11. The positive electrode active material of claim 1, wherein the first particle has a powder resistivity of about 10 $\Omega$-cm to about 90 $\Omega$-cm.

12. A positive electrode comprising:

   a positive electrode current collector; and
   a positive electrode active material layer on the positive electrode current collector,
   wherein the positive electrode active material layer comprises the positive electrode active material of any one of claims 1 to 11, a conductive material, and a binder, and
   wherein the positive electrode is for a rechargeable lithium battery.

13. The positive electrode of claim 12, wherein the binder comprises at least one selected from the group consisting of polyvinyl alcohol, carboxymethyl cellulose, hydroxypropyl cellulose, diacetyl cellulose, polyvinylchloride, carboxylated polyvinylchloride, polyvinyl fluoride, a polymer comprising ethylene oxide, polyvinylpyrrolidone, polyurethane, polytetrafluoroethylene, polyvinylidene fluoride, polyethylene, polypropylene, a styrene-butadiene rubber, a (meth) acrylate styrene-butadiene rubber, an epoxy resin, a (meth)acrylic resin, a polyester resin, and nylon.

14. The positive electrode of claim 12 or claim 13, wherein the conductive material comprises a carbon-based material; a metal-based material in a form of a metal powder or a metal fiber; a conductive polymer; or a mixture thereof.

15. A rechargeable lithium battery comprising;

   a positive electrode,
   a negative electrode,
   a separator, and
   an electrolyte solution,
   wherein the positive electrode comprises the positive electrode active material of any one of claims 1 to 11.

# FIG. 1

# FIG. 2

# FIG. 3

EP 4 641 680 A1

# FIG. 4

# FIG. 5

# FIG. 6

# FIG. 7

# FIG. 8

```
                    ┌─────────────┐
                    │    Start    │
                    └──────┬──────┘
                           │
                           ▼
    ┌──────────────────────────────────────────┐
    │  Mixing of precursor, lithium source,     │──── S100
    │    carbon source, and dopant source       │
    └──────────────────┬───────────────────────┘
                       │
                       ▼
    ┌──────────────────────────────────────────┐
    │              Wet grind                    │──── S200
    └──────────────────┬───────────────────────┘
                       │
                       ▼
    ┌──────────────────────────────────────────┐
    │                 Dry                       │──── S300
    └──────────────────┬───────────────────────┘
                       │
                       ▼
    ┌──────────────────────────────────────────┐
    │             Calcination                   │──── S400
    └──────────────────┬───────────────────────┘
                       │
                       ▼
    ┌──────────────────────────────────────────┐
    │              Dry grind                    │──── S500
    └──────────────────┬───────────────────────┘
                       │
                       ▼
                ┌─────────────┐
                │     End     │
                └─────────────┘
```

FIG. 9A

FIG. 9B

Europäisches
Patentamt

European
Patent Office

Office européen
des brevets

# EUROPEAN SEARCH REPORT

**Application Number**

EP 25 17 1689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 543 009 A (QUJING DYNANONIC NANO TECH CO LTD; FOSHAN DYNANONIC TECH CO LTD) 9 February 2024 (2024-02-09) * paragraphs [0036], [0045], [0059], [0086], [0102]; examples A1, B1, A4; tables 1, 2 * | 1-15 | INV. H01M4/36 H01M4/505 C08K3/32 H01M4/58 H01M4/62 H01M10/0525 H01M4/02 H01M4/136 |
| A | CN 103 828 099 B (A123 SYSTEMS INC) 20 April 2018 (2018-04-20) * paragraph [0106] * & EP 2 737 565 B1 (A123 SYSTEMS LLC [US]) 25 September 2019 (2019-09-25) | 1-15 | |
| A | CN 117 691 107 A (FOSHAN DYNANONIC TECH CO LTD; SHENZHEN DYNANONIC CO LTD) 12 March 2024 (2024-03-12) * paragraphs [0041], [0100]; examples A1, B1; tables 1, 2 * | 1-15 | |
| A | US 2024/079551 A1 (WANG BANGRUN [CN] ET AL) 7 March 2024 (2024-03-07) * tables 1-4 * | 1-15 | **TECHNICAL FIELDS SEARCHED (IPC)** H01M C08K |

The present search report has been drawn up for all claims

| Place of search | Date of completion of the search | Examiner |
|---|---|---|
| The Hague | 4 August 2025 | Jones, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1689

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | | Publication date | Patent family member(s) | | Publication date |
|---|---|---|---|---|---|
| CN 117543009 | A | 09-02-2024 | NONE | | |
| CN 103828099 | B | 20-04-2018 | CN | 103828099 A | 28-05-2014 |
| | | | EP | 2737565 A1 | 04-06-2014 |
| | | | JP | 6396799 B2 | 26-09-2018 |
| | | | JP | 2014524133 A | 18-09-2014 |
| | | | KR | 20140068893 A | 09-06-2014 |
| | | | US | 2014138591 A1 | 22-05-2014 |
| | | | WO | 2013016426 A1 | 31-01-2013 |
| CN 117691107 | A | 12-03-2024 | CN | 117691107 A | 12-03-2024 |
| | | | WO | 2025113416 A1 | 05-06-2025 |
| US 2024079551 | A1 | 07-03-2024 | CN | 117769771 A | 26-03-2024 |
| | | | EP | 4310949 A1 | 24-01-2024 |
| | | | JP | 2024517471 A | 22-04-2024 |
| | | | KR | 20230170730 A | 19-12-2023 |
| | | | US | 2024079551 A1 | 07-03-2024 |
| | | | WO | 2023201486 A1 | 26-10-2023 |

EPO FORM P0459

For more details about this annex : see Official Journal of the European Patent Office, No. 12/82